Europäisches Patentamt

(19) European Patent Office

Office européen des brevets

(11) Publication number: **0 091 092**
A1

(12) **EUROPEAN PATENT APPLICATION**

(21) Application number: 83103189.3

(22) Date of filing: 30.03.83

(51) Int. Cl.³: **A 23 B 7/02**
A 23 P 1/00, A 23 K 3/00
A 23 K 3/02

(30) Priority: 05.04.82 US 363785
05.04.82 US 363784
05.04.82 US 363783

(43) Date of publication of application:
12.10.83 Bulletin 83/41

(84) Designated Contracting States:
BE CH DE FR GB IT LI NL

(71) Applicant: FENN & COMPANY
1445D North Gateway Boulevard
Cottage Grove Oregon 97424(US)

(72) Inventor: Fenn, George
Box 8 Henderer Road
Elkton Oregon 97436(US)

(74) Representative: Baillie, Iain Cameron et al,
c/o Ladas & Parry Isartorplatz 5
D-8000 München 2(DE)

(54) **Material for drying cut plants and grains and methods of facilitating such drying.**

(57) A material including a drying agent which provides a pH of at least 11 and which becomes at least partially insoluble at a pH below 13.4. This drying agent is selected from a group consisting of carbonates, phosphates and silicates of sodium and potassium and a combination of the hydroxides, carbonates and bicarbonates of sodium and potassium. The material also includes a mold-inhibiting agent selected from a group consisting of acids and acid salts of propionic, sorbic, acetic and carboxylic acids and other fally acids.

A water-proofing agent, e.g. sodium-methylsiliconate, and/or a surface-active agent, e.g. alkyl glucoside, is also included in the composition.

EP 0 091 092 A1

0091092

## MATERIAL FOR DRYING CUT PLANTS AND GRAINS AND
## METHODS OF FACILITATING SUCH DRYING

Cut plants such as grass or alfalfa and other types of legume are used during the winter months to provide feed for farm animals such as horses and cows. The plants are cut and are then dried in the sun for a few days to reduce, and hopefully minimize, moisture. It is important to eliminate, or at least reduce, the moisture because the plants otherwise tend to mold. When the plants mold, they are no longer satisfactory for animal feed.

Various attempts have been made to reduce, and hopefully eliminate, the moisture in cut plants. Until recently, such efforts have met, at best, limited success. This has been particularly true because the leaves on many types of cut plants tend to dry faster than the stems. The differences in the rates of drying in such plants have existed in part because the stems are more bulky than the leaves are more delicate than the stems. It has also resulted in part from the fact that the stems have wax coatings which inhibit the operation of any drying agent in removing moisture from the plants.

There are also other problems which inhibit the proper drying of the cut plants. For example, when the plants are cut, they tend to be deposited in windrows for drying by the sun and the wind. The moisture content at different positions in the windrow tends to vary over considerable limits. Furthermore, the rate of drying of the cut plants at the different positions in the windrow is not uniform. As a result, all of the cut plants do not become dry at the same time. This has caused positions of moisture to exist in the windrow and these positions of moisture have produced molding, particularly of the leaves. The molding of the leaves then tends to spread so that the plants are no longer usable as feed.

The problems of improper drying have particularly existed with respect to legumes such as alfalfa because of their leafy characteristics. This has been particularly unfortunate because the nutritional properties of legumes such as alfalfa are well known. In spite of the considerable effort which has been made to dry such cut plants as alfalfa and other types of legumes, approximately forty percent (40%) of the nutrient value of the crop in such cut plants as alfalfa and other types of legumes has been lost each year as a result of the deleterious effects of moisture.

Materials which overcome the disadvantages discussed above produce a drying of the cut plants, particularly along the stems of the plants, and produce a chemical reaction with the moisture, particularly on the leaves, to inhibit molding when conditions for molding of the leaves exist.

The materials include a drying agent providing a basic pH of at least eleven (11) in a solution and having properties of becoming at least partially insoluble at a pH no greater than approximately 13.4 in the solution. The drying agent has properties of saponifying the wax on the stems as the plant dries and as the pH of the drying agent accordingly increases. The drying agent is selected from a group consisting of the carbonates, phosphates and silicates of at least one of sodium and potassium and a combination of the hydroxides, carbonates and bicarbonates of at least one of sodium and potassium.

The materials also include a mold-inhibiting agent having properties of remaining inactive until the occurrence in the plant of conditions inducing molding and having properties of reacting with the moisture, under conditions of temperature and moisture inducing molding, to inhibit the formation of the mold. The mold inhibiting agent may be selected from a group consisting of acids and acid salts of at least one of propionic, acetic, sorbic and carboxylic acids and other fatty acids.

The materials described above may be applied to plants, before the plants are cut, by bending the plants to facilitate the direction of the spray along the stems and leaves of the plants. After the plants are cut, the plants may be assembled into a relatively high, loosely-packed windrow. When the plants in the windrow have dried, the windrow is raked or turned over and the windrow is baled shortly thereafter. Alternatively, the plants may be laid flat on the ground after being cut. If desired, the plants may thereafter be assembled into a loose pile constituting the equivalent of a windrow.

This invention includes additional materials for use with the drying and mold-inhibiting agents. One of these materials is a waterproofing agent having properties, at the pH of the drying agent in the solution, for providing for a passage of moisture from the cut plants while preventing drops of water from being reabsorbed on the plants. The waterproofing agent is mixed with the drying agent and the mold-inhibiting agent. The waterproofing agent may be sodium methyl siliconate or other types of methyl siliconate such as potassium methyl siliconate. By including such a waterproofing agent, rain and droplets of dew cannot have a deleterious effect on the cut plants after the plants have been dried. Although the waterproofing agent prevents drops of water and dew from being absorbed on the plants, any water on the plants is still capable of being vaporized and escaping from the cut plants.

The materials of this invention also include a surface-active agent.  This agent has the properties of facilitating the penetration of the drying agent and the mold-inhibiting agent into plants such as grass and plants of the peanut family where the leaves are rolled within one another.  The surface-active agent tends to reduce the surface tension of the leaves of such plants so that the leaves will receive the drying agent and the mold-inhibiting agent.  The concentration of the surface-active agent in the solution may be controlled in accordance with the particular type of plants being treated so as to control the extent to which the leaves of the plant are wetted by the drying agent, the mold-inhibiting agent and the waterproofing agent.  The surface-active agent is also advantageous in being able to withstand high concentrations of alkali and electrolytes without becoming insoluble (salting out).  The surface-active agent may be an alkyl glucoside.

This invention may also provide two (2) different drying agents each of which performs an individual function in drying cut plants.  The dyring agents co-operate to provide a basic pH between approximately 12.4 and 13.2 in a solution when the drying is to be provided primarily on the stems of the cut plants. The drying agents may include a first material which provides a pH of at least 12.4 in the solution.  The first drying agent may constitute a metasilicate such as sodium metasilicate.  The drying agents may also include a second material such as a carbonate. Sodium or potassium carbonate are preferable.  The second drying agent constitutes a buffer to limit the pH to a value of approximately 13.2 in the solution.

The metasilicate is in the form of a colloid of silicon dioxide and this colloid tends to act on the waxes on the stems to saponify the waxes.  The drying agents operate primarily on the stems of cut plants to saponify the waxes on the surfaces of the stems. The drying agents form a chemical complex which serves as a protective coating on the stems to prevent water from re-entering into the stems or forming on the stems.

Because of the chemical complex which protects the surfaces of the plants against the entry of water, the drying agents may also be used at a reduced pH to protect the leaves of plants. For example, the drying agents may be used at a pH between approximately 10 and 11 in the solution to protect the leaves of the plants. The drying agents may also be used in the solution at a suitable pH such as between approximately 10 and 11 to protect other materials such as grains.

This invention also provides mold-inhibiting agents for producing an enhanced operation in inhibiting the formation of molds during the drying operation. The mold-inhibiting agents may include a first substance such as an isothiazolin which provides an immediate inhibiting action against the formation of fungi in the cut plants. This first substance provides such an immediate inhibiting action against the formation of fungi in the cut plants by inhibiting the combustion of carbohydrates in the cut plants and the resultant formation of water from such combustion. The mold inhibiting agents may also include a second substance such as a propionate which does not become active in inhibiting the formation of fungi until the pH of the drying materials has become reduced below a value of approximately 6.

The combination of the isothiozolin and the propionate as the molding inhibiting agents offers certain advantages, particularly when drying·such as the metasilicate and the carbonate are used in combination. This results partially from the fact that the high and controlled value of pH provided by the metasilicate and the carbonate tends to minimize the time required for the drying of the cut plants to occur. The minimal time for the drying is also facilitated by the action of the isothiazolin in inhibiting the combustion of carbohydrates in the cut plants by inhibiting the formation of fungi which generate heat. Since the combustion of carbohydrates in the cut plants is inhibited, the production of water as a result of the combustion of carbohydrates is inhibited.

Since the production of water tends to accelerate the molding of the cut plants, the action of the isothiazolin in inhibiting the combustion of the carbohydrates in the cut plants tends to thwart any possibility of a regenerative action from occurring. In this regenerative action, the carbohydrates would combust and cause water to be produced and heat to be generated, such heat in turn accelerating the combustion. By inhibiting the formation of fungi and the combustion of carbohydrates, the isothiazolin insures that the propionate will act as a reserve and will become active only if an initiation of molding in the cut plants causes the pH of the materials to become reduced to a value of approximately 6.

The materials of this invention are applied primarily to various cut plants such as alfalfa, grass and plants of the peanut family. However, the materials of this invention may also be applied to grains such as wheat and kernels of corn where the ratio of volume to the surface area is relatively high. This is particularly true when the grains are stored in silos or bins.

In the drawings:

Figure 1 is a fragmentary schematic perspective view of apparatus for spraying and cutting plants in a field;

Figure 2 is a fragmentary schematic side elevational view of certain components shown in Figure 1 and particularly illustrates the action of such components in bending, spraying and cutting the plants in the field;

Figure 3 is a schematic view, partly in side elevation from a mechanical standpoint and partly in block form from an electrical standpoint, of a second embodiment of the invention;

Figure 4 is a schematic view, partly in side elevation from a mechanical standpoint, of a third embodiment of the invention; and

Figure 5 is a schematic view, partly in side elevation from a mechanical standpoint, of a fourth embodiment of the invention.

In one embodiment of the invention, material is provided for drying cut plants such as grass and alfalfa and other types of legumes. The material preferably includes a drying agent such as potassium carbonate or sodium carbonate. Preferably, the potassium carbonate or sodium carbonate is in a solution with a suitable solvent such as water. The potassium carbonate or sodium carbonate is preferably applied to the cut plants in a concentration of approximately there (3) pounds to six (6) pounds per ton of dried cut plants. This corresponds to a concentration by weight of potassium carbonate or sodium carbonate on the dried cut plants of approximately 0.15% to 0.30%. The concentration of the potassium carbonate in the solution applied to the plants is dependent upon the relative amount of moisture on and in the cut plants and is also dependent upon the particular variety of cut plant being treated. The solvent in the solution may constitute any suitable material but is preferably water.

Preferably, the drying agent such as potassium carbonate or sodium carbonate has a pH in excess of approximately 11.4 in the solution. This value of pH in the solution is effective in causing the potassium carbonate or sodium carbonate to saponify the particular waxes on the stems of the cut plants, particularly as the pH of the potassium carbonate or sodium carbonate in solution on the cut plants increases. By saponifying such waxes, the potassium carbonate or sodium carbonate facilitates the drying of the stems.

As the cut plants dry, the concentration of the potassium carbonate or sodium carbonates on the cut plants tends to increase. As will be appreciated, an excessive concentration of the potassium carbonate or sodium carbonate on the cut plants is undesirable because it tends to scorch the cut plants. For example, when the pH of the drying agent on the plants becomes as high as approximately fourteen (14), plants tend to become chemically burned and the chlorophyll in the plants becomes destroyed. Potassium carbonate or sodium carbonate is desirable in this respect because the potassium carbonate or sodium carbonate becomes at least partially insoluble at a pH of approximately 13.4. This causes the potassium carbonate or sodium carbonate to become at least partially deposited upon cut plants as the plants become dried. In this way, the pH of the potassium carbonate or sodium carbonate is automatically regulated at a safe value.

A chemical complex may also be provided for drying cut plants such as grass and alfalfa and other types of legumes. The drying agents of the chemical complex preferably have a pH between 12.4 and 13.2 in a solution. The solution may contain any suitable solvent but the solvent is preferably water.

0091092

The drying agents preferably include a first material which provides a pH of at least a particular value in the solution. This first material is preferably a metasilicate such as sodium metasilicate when the drying agents provide a pH of at least 12.4 in the solution. A pH of at least 12.4 is provided for the drying agents when the drying agents are to be used primarily to dry the stems of the cut plants. A reduced pH such as a pH between 10 and 11 may be provided for the drying agents when the drying agents are to be used to dry the leaves of cut plants such as legumes. Under such conditions, the drying agents with a pH of approximately 10 to 11 may be applied to the leaves and drying agents with a pH of approximately 12.4 to 13.2 may be applied to the stems.

The drying agents preferably include a second material which acts as a buffer for the first drying agent to limit the pH of the first drying agent to a particular value in the solution. Such buffer preferably constitutes a carbonate. The carbonate may be included directly or it may be obtained by mixing sodium hydroxide with a suitable carbonate in the solution.

When the chemical complex is to be used primarily to dry stems of cut plants, the buffer acts to limit the pH of the drying agents in the solution to a particular value such as 13.2. In this way, the pH of the drying agents is maintained in the solution within a relatively limited range such as approximately 12.4 to 13.2. A pH of at least 12.4 for the drying agents in the solution is desirable in order to expedite the action of the drying agents in drying the cut plants when the solution containing the chemical complex is sprayed on the cut plants. A limit of approximately 13.2 for the pH of the drying agents is desirable in order to be certain that the plants do not become scorched or burned by the drying agents. Furthermore, by maintaining the pH of the drying agents at a limit of approximately 13.1, the chlorophyll in the cut plants does not become damaged.

When a metasilicate is used, silicon dioxide does not appear to be really in solution. Rather, silicon dioxide appears to exist as a colloid in the solution. This colloid appears to act on the waxes existing on the stems of the cut plants and to saponify such waxes so that the waxes can be removed. In this way, the moisture on and in the stems can be removed by the drying agents and by the atmosphere.

The metasilicate also appears to react with the carbonates and form a protective coating which becomes disposed on the surface of the plants, primarily the stems of the plants. This protective coating prevents water from becoming disposed on the stems of the plants after the water has been dried from the stems. It also prevents water from becoming re-absorbed in the cut plants.

When a pH of approximately 12.4 to 13.2 is provided in the solution for the drying agents, approximately two and one-half pounds (2½ lbs) of carbonate is mixed with approximately two and one-half pounds (2½ lbs) of metasilicate in a suitable amount of solvent such as water to produce one (1) ton of dried cut hay. This corresponds to a concentration by weight of drying agents in the dried cut plants of approximately 0.25%. This mixture of drying agents provides a pH approaching 13 in the solution. This ratio between the two (2) drying agents produces a much faster and more effective drying of the cut plants than would be predicted by the use of the materials separately or even together or than would be predicted by the use of these materials in other ratios. Of course, the amounts of metasilicate and carbonate in the solution are dependent upon atmospheric conditions such as humidity. For example, the amounts of the drying agents used are higher for atmospheric conditions of high humidity than for atmospheric conditions of low humidity.

Since the sodium metasilicate constitutes the primary drying agent, sodium carbonate can be used instead of potassium carbonate. This results from the fact that sodium carbonate is as effective as a buffer as potassium carbonate even though potassium carbonate is more effective as a drying agent than sodium carbonate. The use of sodium carbonate as a buffer is advantageous because it is considerably less expensive than potassium carbonate.

The use as the drying agents of metasilicates in combination with carbonates also offers other advantages. Although all silicates are non-stoichrometric, metasilicates ($Na_2O.SiO_2$) are more stoichiometric than weaker silicates such as sodium silicate. As a result, the pH of metasilicates for different percentages of the metasilicate ($Na_2O.SiO_2$) in a solution can be predicted with greater certainty than when relatively weak silicates are used. Furthermore, sodium metasilicate has a considerable wetting action in itself. This reduces considerably any need for employing any additional wetting agents in the solution. This is particularly true since the mold-inhibiting agent included in the solution also has some wetting action. However, the use of additional wetting agents is still preferable, as will be seen from the subsequent discussion.

The combination of a silicate and a carbonate as a drying agent may also be used to dry the leaves of plants and to form a protective coating on the leaves in the manner discussed above. Under such circumstances, the pH of the drying agent is preferably between about 10 and 11. Since the leaves tend to become dried even when the combination of the silicate and the carbonate is applied to the leaves, the primary purpose of applying the silicate and the carbonates to the leaves is to form the protective coating. Furthermore, sodium metasilicate ($na_2O.SiO_2$) or a solution of sodium silicate (e.g., $Na_2O.2(SiO_2)$) even weaker than sodium metasilicate can be used since the pH of the drying agents is only in the order of 10 to 11.

As will be appreciated, solutions of different pH strength may be separately applied to the stems and to the leaves of the plants. For example, a combination of drying agents with a pH of approximately 12.4 to 13.2 in the solution may be applied to the stems to dry the stems and form a protective coating on the stems, and a combination of drying agents with a pH of approximately 10 to 11 in the solution may be separately applied to the leaves to form a protective coating on the leaves.

Potassium carbonate, sodium carbonate and sodium metasilicate are desirable because they may be contacted and ingested safely by human beings and animals. Other materials may also be safely used as drying agents. For example, a combination of approximately ten percent (10%) by weight of sodium hydroxide (NaOH) and ninety percent (90%) by weight of sodium bicarbonate (NaHCO$_3$) may also be used. Trisodium phosphate ($Na_3PO_4$), sodium orthosilicate ($Na_3SiO_4$) and sodium metasilicate ($Na_2SiO_3$) may also be used.

A material such as sodium propionate is also included for inhibiting the molding of the cut plants, particularly the leafy portions of the cut plants. The sodium propionate may have a concentration of approximately two pounds (2 lbs.) to six pounds (6 lbs.) per ton of the dried cut plants. This corresponds to a concentration of approximately 0.1% to 0.3% by weight in dried cut plants. It further corresponds to a weight of approximately two percent (2%) to six percent (6%) by weight of the sodium propionate in the solution. The concentration of the sodium propionate on the cut plants depends upon the moisture on the plants. For example, approximately two and one (2½ lbs.) of sodium propionate per ton of dried cut plant may be used in dry weather, and approximately five pounds (5 lbs.) per ton of dried cut hay may be used in humid weather.

Sodium propionate is desirable because it is safe when it is ingested or contacted by human beings or animals. The sodium propionate may be formed by pre-mixing sodium hydroxide and propionic acid to form sodium propionate and water and then drying the water. Alternatively, the sodium hydroxide and propionic acid may be mixed at the time that the materials of this invention are being formed.

Sodium propionate is inactive chemically and is also relatively non-volatile when it has a pH of at least six (6). This will cause the sodium propionate to remain inactive chemically during the drying operation because the pH of the drying agent is considerably in excess of six (6). However, the cut plants ferment as a precursor to molding. Since fermentation is an acidic process, the pH of the solution will decrease. This will cause the sodium propionate to become active chemically when the pH decreases below a value of approximately six (6). As a result, the propionate acts as a fungicide in inhibiting the molding of the cut plants, particularly the leaves on the cut plants. The propionate acts as a fungicide in part because it constitutes a fatty acid.

In one embodiment of the invention, a pair of mold inhibiting agents may be provided. One of the mold inhibiting agents may be an isothiazolin such as 2N-octyl-4-isothiazolin-4-1. This material has the properties of acting immediately to inhibit the formation of fungi in the cut plants. By inhibiting the formation of fungi in the cut plants, the isothiazolin inhibits the generation of heat. Inhibiting the generation of heat in turn inhibits the combustion of carbohydrates in the cut plants. Since the formation of water is a by-product of the combustion of carbohydrates, the inhibition of combustion inhibits the formation of water. Furthermore, since the formation of water accelerates the formation of fungi and the generation of heat, the inhibition in the formation of water inhibits the formation of fungi and the generation of heat. The inclusion of the isothiazolin accordingly prevents a regenerative cycle from occurring in which the generation of heat and water is accelerated and the formation of fungi is accelerated. The use of isothiazolin is further advantageous because it is effective against a relatively broad range of fungi.

Isothiazolin is relatively strong. Therefore, only approximately ten (10) parts of the isothiazolin per one million (1,000,000) parts by weight of the solution may have to be used. This amounts to a concentration of the isothiazolin in the solution of approximately 0.001%. The range of the isothiazolin in the solution by weight may be varied between three (3) to fifty (50) parts per one million (1,000,000) parts of the solution, depending upon atmospheric conditions such as humidity. For example, as the humidity is increased, the amount of the isothiazolin in the solution is increased to provide an enhanced action against the formation of fungi and the generation of heat. The use of isothiazolin is desirable because it can be safely ingested and contacted by human beings and animals.

Other materials may be substituted for the isothiazolin in the solution. For example, other sulfur bearing materials may be used. Calcium polysulfide may be an example. The sulfur in such material may be effective in inhibiting the formation of fungi, just as the sulfur in the isothiazolin is effective in inhibiting the formation of fungi.

The isothiazolin may be considered to provide a synergistic effect with the combination of the metasilicate and the carbonate as drying agents. As previously described, the metasilicate provides a high pH in the solution and the carbonate acts as a buffer to limit the maximum value of the pH to a relatively narrow range. The combination of the metasilicate and the carbonate accordingly acts to dry the cut plants in a minimal period of time. The isothiazolin co-operates with these drying agents in providing for the drying of cut plants in a minimal period of time by preventing the formation of fungi and the generation of heat and water during this period.

The propionate becomes effective as a mold inhibiting agent only when the pH of the solution on the cut plants falls to a value of approximately 6. When the propionate becomes effective, it acts primarily to inhibit the molding of the leaves of the cut plants. Until the propionate becomes effective, it exists only at localized positions on the cut plants. When the propionate becomes effective, it propagates and is able to be effective on the complete areas of the plants, and primarily on the leaves of the cut plants. The propionate may be able to propagate because it constitutes a volatile fatty acid. The propionate is preferably sodium propionate although potassium propionate may also be used quite effectively.

0091092

Other materials may be used as mold inhibitors in addition to sodium propionate. For example, other propionate salts such as ammonium propionate and calcium propionate may also be used. However, calcium propionate may tend to react with the potassium carbonate or sodium carbonate to form calcium carbonate, which may precipitate. Furthermore, salts of other acids such a sorbic and carboxylic acids or acetic acid (most of which are fatty acids) or salts such as sodium or potassium acetate may also be advantageous. Propylene glycol may also be advantageous, particularly when used with sodium propionate, because it constitutes a good fungus inhibitor and tends to facilitate the saponification of the stems of the plants and to facilitate withdrawal of water from the plants. All of the different chemicals specified above as mold-inhibitors are also advantageous because they may be contacted and ingested safely by human beings and animals.

Other materials may also be used as a mold inhibitor. For example, a 2 N-octyl 4-isothiazolin-3-1 may be used as the mold inhibitor. Such material is supplied by Rohm and Haas. Such a material may be used in a concentration of approximately 0.005 pounds to 0.25 pounds per ton of dried cut plants. This material may also be contacted and ingested safely by human beings and animals.

A waterproofing agent may also be included in the solution containing the drying agent and the mold-inhibiting agent. The waterproofing agent waterproofs the cut plants after the cut plants have dried for a suitable period of time, such as approximately twenty four (24) hours. The waterproofing agent has the properties, at the pH of the drying agent in the solution, for providing for a passage of moisture from the plants or water vapor while preventing drops of water from being reabsorbed on the plants.  This is of considerable importance since the waterproofing agent can prevent rewetting of the cut plants by rain showers or by drops or droplets of dew during the final stages of the drying process or in the period of time between the final stages of the drying process and the baling and storage.  The waterproofing agent may be applied primarily to the leaves of the cut plants.

The waterproofing agent may constitute sodium methyl siliconate, which is marketed by Dow Corning as DC-772.  When sodium methyl siliconate is used as the waterproofing agent, it is not toxic to humans or animals to ingest or touch.  Furthermore, it is compatible with a high pH (at least 11.4), with the drying agent and with any cutin disarrangements which may occur during the chemical drying of the cut plants.  Other types of methyl siliconates than sodium methyl siliconate may also be used.

The waterproofing agent may be included in a hydroxide base such that the waterproofing agent constitutes approximately thirty percent (30%) of the hydroxide solution by weight.  The waterproofing agent may have a weight in the solution (including the drying agent and the mold-inhibiting agent) in the range of approximately one tenth of one percent (0.1%) to three percent (3%).  Preferably the waterproofing agent is included in such solution in the range of one percent (1%) to two percent (2%) by weight of the dried cut plants.  The amount of waterproofing agent included in the solution is dependent upon the amount of water vapor on the plants and is also dependent upon the value of the cut plants.  The amount of waterproofing agent may be increased if the value of the cut plants is increased. The amount of waterproofing agent in the solution is also increased as the amount of water vapor on the plants increases.

A surface active agent having unique properties is also preferably included in the solution containing the drying agent, the mold-inhibiting agent and the waterproofing agent. The surface active agent may constitute alkyl glucoside. This material is advantageous because it is able to penetrate into the leaves of cut plants such as grass and plants of the peanut family to reduce the surface tension of the leaves in these plants. The surface tension of the leaves in these plants is ordinarily quite high because the leaves have fine hairs which prevent materials from penetrating into the plants. The surface active agent may be applied, before cutting, to the leaves of the plants or to the stems of the plants or to the leaves and the stems of the plants.

When the surface tension of the leaves in grasses and plants of the peanut family is reduced by the surface active agent, the other materials in the solution such as the drying agent, the mold inhibiting agent and the waterproofing agent are able to penetrate into the plant to produce a drying of the moisture within the leaves. This is important in such plants as grass because the leaves in the grass tend to be rolled within one another and thereby inhibit any action of the drying agent in drying the moisture within the rolled leaves.

A surface active agent such as alkyl glucoside is particularly effective in such cut plants as grasses. In cut plants such as grasses, the petiole is attached to the stem and only one leaf appears to be attached to the petiole. Actually, however, a plurality of leaves are rolled inside one another in grasses and are attached to the petiole. This makes it difficult for the drying agent and the mold-inhibiting agent to penetrate into the space occupied by the rolled leaves. By providing a surface active agent such as alkyl glucoside, the alkyl glucoside penetrates into the space occupied by the leaves in the grasses and facilitates the penetration of the drying agent and the mold-inhibiting agent into such space. This facilitates the drying of the moisture within the rolled leaves in the grasses. Alkyl glucoside is particularly effective as a drying agent because it is active at a pH above 11.

The drying of grasses is important because grasses are commonly used as feed for animals. Although grasses may have less nutritional value than legumes, they are more rugged than legumes and can be treated more roughly than legumes without losing their nutritional properties. For example, grasses can be treated more roughly than legumes without losing their leaves.

The surface active agent such as alkyl glucoside may be effective primarily against the stem. This is particularly true when the concentration of the alkyl glocuside by weight in the solution is in the range of approximately 0.01% to 0.02%. However, when it is desired to penetrate the leaves in such cut plants as grasses and plants of the peanut family, the concentration of the surface active material such as alkyl glucoside by weight in the solution may be increased to a range of approximately 0.03% to 0.1%. In such concentrations, the alkyl glucoside tends to penetrate into the fine hairs in such leaves and to reduce the surface tension of the leaves so that the drying agent, the mold-inhibiting agent and the waterproofing agent can penetrate into the space between the leaves. Preferably, the concentration of the alkyl glucoside by weight in the solutions is about 0.05%. As with the other materials specified above, the solute may constitute any suitable material but is preferably water.

In this way, the preferential wetting of the different portions of the cut plants by the solution constituting this invention can be controlled by adjusting the concentration of the surface active agent in the solution to control the surface tension of the leaves in such cut plants. The surface active agent such as alkyl glucoside is also effective in being able to withstand high concentrations of alkali (such as at a pH of at -least 11) and electrolytes without becoming insoluble (salting out).

When the concentration of the solution containing the drying agent, the mold-inhibiting agent, the waterproofing agent and the surface-active agent is varied, changes do not have to be made in the amount of such agents per pound of dried harvested crop. This results from the fact that changes in concentration per pound of cut plants can be inversely related to the rate at which the solution containing such various agents is applied. For example, when the concentration of the solution is increased because the amount of moisture on the cut plants is increased, the rate of applying the material to the plants can be decreased because the material is diluted by the moisture on the plants. For normal conditions of humidity, the amount of water used is about twenty (20) gallons per ton of cut dried plants. This corresponds to a concentration of approximately two and one half percent (2.5%) of the propionate by weight in the solution. It also corresponds to a weight of approximately two and one half percent (2.5%) by weight of the drying agent or agents in the solution.

The plants dried by the materials of this invention tend to pack more closely than the plants dried in the conventional manner of the prior art. For example, the plants dried by the material of this invention tend to weigh approximately one hundred and seventy five pounds (175 lbs.) per bale. In contrast, the plants dried in the conventional manner of the prior art tend to weigh approximately one hundred and forty pounds (140 lbs.) per bale. This increased density results in part because the leaves are retained on the plants when the plants are dried by the materials of this invention. Furthermore, the plants tend to be softer when dried by the materials of this invention than when dried in the conventional manner of the prior art. Since the plants are relatively soft, they can be packed more closely than in the prior art. This is advantageous in providing hay which will be comfortable in the mouths of cattle.

The drying of alfalfa (legume) may be expressed by the following equation;

$$dM/dT + K_1 (M-M_e)a_s b_2 c_1, \text{ where}$$

$M$ = moisture content;

$M_e$ = equilibrium moisture content = 0.279 Exp (-0.5395)

$L$ = leaf:stem ratio; and

$S$ = saturation deficit (KPa), a function of humidity.

These relationships have not remained invariant under different field conditions. For example, if there are relatively large air spaces between the various forage stems and leaves, the cut plants may dry relatively quickly and uniformly so that $S$ will assume the value of the outside atmosphere. If the stems and leaves are packed closely together, their circulation will be reduced. This will cause the value of $S$ to be relatively small. The air spaces also become reduced when the forage starts to decay before it is dried. This results from the fact that the forage tends to soften as it decays so that air spaces are reduced. In view of the above, it is important to decrease the drying time constants and to inhibit the decaying process.

The material of this invention is applied to the plants after the plants have been bent. By bending the plants, the material can be applied as a spray along the full length of the stems and on the leaves. The plants are cut at a position near the stems and the cut plants may then be brought together to define a windrow. The windrow is preferably high and loosely packed to facilitate the circulation of air through the windrow. In this way, the drying of the plants is facilitated. Alternatively, the cut plants may be laid flat on the ground. If desired, the cut plants may be manually assembled into loose packs constituting the equivalent of windrows.

The application of the materials of this invention is somewhat dependent upon the particular plants being cut and dried. For example, when alfalfa is being dried, the materials of this invention are applied primarily to the stems since the leaves tend to become dried even when a relatively small amount of such materials is applied to the leaves. It will be appreciated that some of the materials will be applied to the leaves even when the spray is directed only against the stems. This results in part from the fact that the materials of this invention tend to become transferred to the leaves as the plants are cut and are passed through the rollers on the cutting and windrowing apparatus.

When plants such as grass and plants of the peanut family are to be dried, the materials of this invention are applied to the stems and the leaves. This results from the fact that the leaves tend to retain moisture because of their rolled characteristics and because of the action of the petioles on the leaves.

Under ordinary circumstances, a period as long as four (4) days, and sometimes even longer, is required to dry cut plants such as grass and alfalfa. Such long periods of time are undesirable for several reasons. One reason is that weather is unpredictable. As a result, as the time required to dry the cut plants is increased, the possibility of rain during that time increases. Furthermore, the tendency for the cut plants to mold or decay increases as the time required for the drying increases. The cut plants also tend to respire as they lie in the fields and they tend to loose nutrients as they respire.

The materials of this invention tend to dry the cut plants such as alfalfa and other types of legumes in a period of less than two (2) days. This is in contrast to a drying period of eight (8) to twelve (12) days, for example, during the winter in the Imperial Valley of California when the plants such as alfalfa are dried in the conventional manner of the prior art. During the drying process, molding of the cut leaves is inhibited. This is important in preserving the leaves on the cut plants. Since the leaves provide more nutrients than the stems, the preservation of the leaves on the cut plants is highly advantageous. The relatively fast drying also minimizes respiration of the plants and accordingly preserves the nutrients in the plants. The cut plants in each windrow are preferably raked or turned approximately an hour or less before being baled.

When the cut plants are raked, they are accumulated in a windrow of shortened lateral dimension and increased height. This facilitates the baling operation. When the cut plants are turned, the cut plants at the bottom of the windrow now appear at the top of the windrow. This gives these cut plants an opportunity to be dried. This is desirable because the cut plants near the bottom of the windrow tend to accumulate moisture such as from the dew on the ground. However, the accumulation of dew in the cut plants is relatively insignificant because of the action of the waterproofing agent. When the cut plants are turned, they may be raked before being baled.

Even under optimum conditions such as turning the windrow about an hour or less before baling, there is a moisture variation of about four percent (4%) to five percent (5%) within a bale. In a well-packed bale, the moisture does not equalize significantly within the curing interval. As a result, a high moisture region of several cubic inches will continue to exist during the curing process. Although hay of a moisture level of a substantially uniform twenty percent (20%) or twenty one percent (21%) may be mold free, hay with an average moisture level of approximately twenty percent (20%) and peak moisture regions of approximately twenty five percent (25%) can develop pockets of spoilage. Such pockets can then spread relatively quickly throughout the bale and prevent the bale from being ingestable by the animals.

The need to dry cut plants quickly and uniformly indicates the importance of providing the pH of the drying agents in the solution with a high and controlled value, such as in the order of 12.4 to 13.2, to obtain the drying of the cut plants in a minimal period of time. This indicates the importance of including the surface-active agent such as alkyl glucoside in the solution to obtain a penetration of the solution into all the areas of the cut plants where the moisture exists. It also indicates the importance of including the mold-inhibiting agent with the drying agent. It further indicates the importance of including the mold-inhibiting agent such as isothiazolin with the mold-inhibiting agent such as sodium propionate. It further indicates the importance of including the waterproofing agent to prevent the dried cut plants from re-absorbing water drops and droplets. For the purposes of this invention, "dried cut plants" may be considered as plants when moisture level is less than twenty percent (20%).

In addition to decreasing the drying time and retaining the leaves, the materials of this invention offer other advantages. For example, tests have shown that the digestible nutrient value of alfalfa produced in the conventional manner of the prior art is approximately fifty percent (50%). These tests have also shown that the digestible nutrient value of alfalfa hay produced by the materials of this invention is increased to approximately sixty-two percent(62%).

Although the increase in nutrient value appears to be only approximately five percent (5%), this increase is quite significant because a dairy cow will not give milk if it is consuming hay with a nutrient value as high as fifty percent (50%) nutrient value. For example, this represents a relative increase in feed value from approximately 115 to approximately 160. Furthermore, the amount of milk delivered by a dairy cow increases rapidly as the nutrient value of the hay consumed by the cow increases above fifty percent (50%).

Tests have also shown that the protein content of the hay dried by the materials and methods of this invention are also increased significantly over the protein content of the hay dried by conventional methods. For example, hay dried by conventional methods has a protein content of approximately 15.8%. In contrast, the protein content of hay dried by the materials and methods of this invention is approximately 18.3%. As will be appreciated, an increase in the protein content of the hay is significant in increasing the nutrient of the hay.

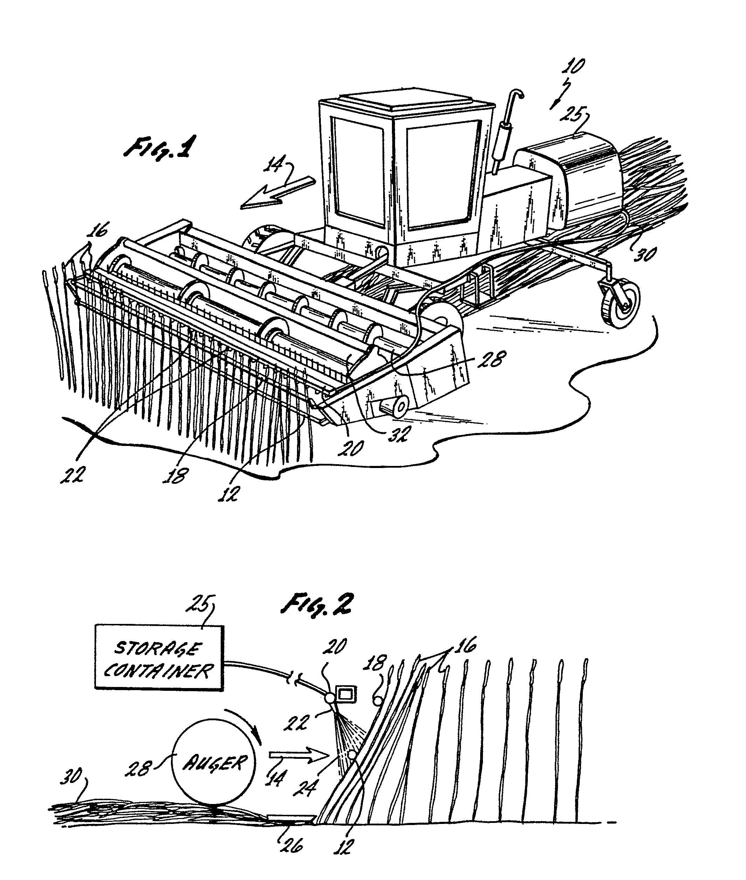

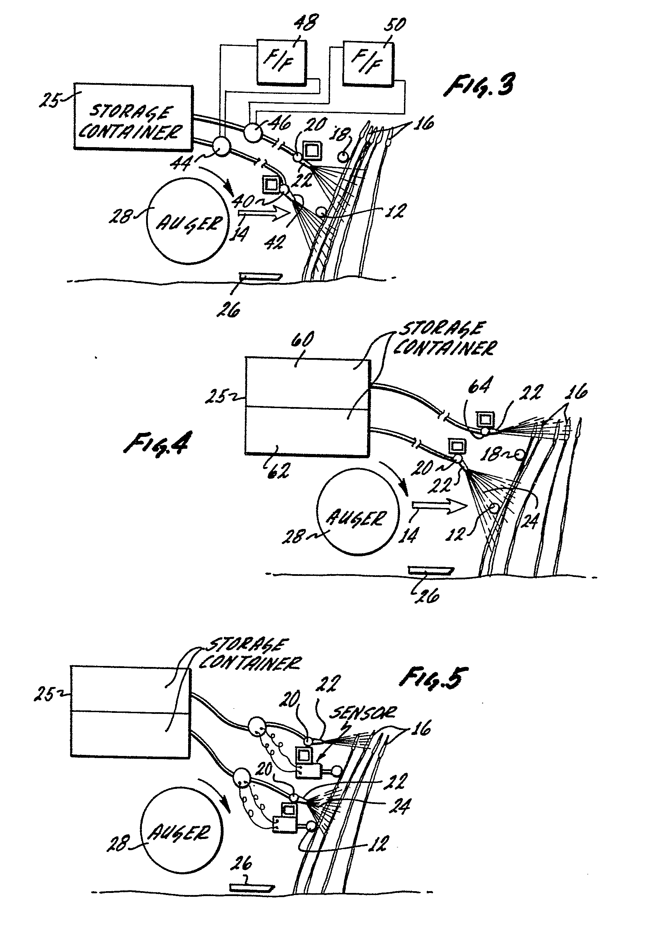

Suitable apparatus for applying the solution of this invention to the plants is shown in Figure 1. Such apparatus includes a movable vehicle generally indicated at 10. The apparatus further includes at least one (1) pushbar 12 attached to the vehicle 10 for bending the plants in the direction and movement of the vehicle, this direction indicated by an arrow 14. The push bar 12 may be disposed at a suitable distance such as approximately one foot above the ground.

When the plants 16 to be cut are relatively short, the push bar 12 may be sufficient. However, when the plants 16 are relatively tall, an additional push bar 18 may be provided. The push bar 18 may be disposed above and forwardly of the push bar 12 in the direction 14 of movement of the vehicle. It will be appreciated that additional pushbars may be provided if needed or desired.

A spray bar 20 is disposed above and rearwardly of the push bars 12 and 18. The spray bar 20 may be provided with nozzles 22 at spaced positions in the lateral direction. The nozzles 22 and the spray bar 20 are disposed to direct the solution in a spray 24 along the length of the plant stem and on the leaves of the plants. The spray 24 may be obtained from a storage container 25.

A cutter bar 26 is disposed rearwardly of spray bar 20 at a position near the bottom of the plant stems. An auger 28 may be disposed rearwardly of the cutter bar 26 to collect the cut plants in a high, loosely packed windrow 30. When an auger is used, the auger 28 also tends to spread any excess solution along the stems and leaves of the plants. The auger 28 may be constructed in a conventional manner. Rollers 32 also tend to squeeze the cut plants to force air and water out of the plants and to facilitate the replacement of such displaced fluids with the solution of this invention as the plants expand after being squeezed. This enhances the action of the drying agent and the mold inhibiting agent of this invention.

As previously described, the leaves of the plants 16 tend to mold easier than the stems. Furthermore, the leaves of the plants 16 tend to dry faster than the stems. In view of this, a different solution may be applied to the leaves than to the stems. This may be obtained by providing a pair of storage containers 60 and 62 and a pair of spray bars 64 and 66. The spray bars 64 and 66 are respectively coupled to the storage containers 60 and 62. The container 60 may hold a solution primarily formed from the drying agent, and the spray bar 64 may direct this solution primarily to the stems. The container 62 may hold a solution primarily formed from the mold inhibiting agent, and the spray bar 66 may direct this solution primarily to the leaves.

Apparatus may be included for controlling the rate at which the material of this invention is applied to the plants. Such apparatus may include a pressure sensor such as a panel 70 which is disposed adjacent the push bar 12 to sense the force of the plants on the push bar. This force is indicative of the volume of the cut plants per unit of area. This force is converted to an electrical signal which is applied to a control mechanism 72. The control mechanism 72 in turn varies the rate at which the solution from a container 74 flows through a spray nozzle 76. A similar arrangement may be associated with the push bar 18 to control the rate at which spray from a container 78 flows through a nozzle 80.

The rate of application of the spray 24 to the plants 16 depends upon the concentration of the

-28-

solution and the rate at which the plants are cut. Since the solution is applied through spray nozzles 22, the nozzle sizes will determine the actual flow rate.

The formula for determining the nozzle flow may be expressed as follows:

$$\text{Flow rate} = \frac{\text{crop density} \times \text{vehicle speed} \times \text{application ratio}}{\text{solution concentration} \times \text{nozzle spacing density}}$$

For example, with a concentration of 3.3% by weight of the drying agent, a vehicle speed of four hundred feet (400') per minute, a nozzle spacing of one half foot (0.5'), a crop density of two (2) tons per acre and a desired application ratio of five (5) pounds of drying agent per ton of crop, the nozzle flow rate should be approximately twenty one hundredths (0.21) gallons per minute per nozzle.

The nozzle flow rate may be precisely controlled as on a digital basis. For example, a second spray bar 40 may be provided with nozzles 42. The nozzles 42 may have an opening one half the size of the openings 22 in the spray bar 20. A valve 44 may be associated with the spray bar 40 to control the flow of the solution through the spray bar. Similarly, a valve 46 may be associated with the spray bar 20 to control the flow of fluid through the spray bar.

Flip-flops 48 and 50 may be respectively associated with the valves 44 and 46. The triggering of the flip-flops 48 and 50 to the true state respectively opens the valves 44 and 46. A triggering of the flip-flops 48 and 40 to the false states respectively closes the valves 44 and 46. By triggering the flip-flops 48 and 50 selectively to the true state, the rate of flow of the solution through the nozzles may be controlled at twenty-five percent (25%), fifty percent (50%), seventy-five percent (75%) and one hundred percent (100%) of full flow. Furthermore, the addition of other spray bars with nozzles of progressively decreasing size will produce further digital refinements in the rate of flow.

As previously described, the leaves of the plants 16 tend to mold easier than the stems. Furthermore, the leaves of the plants 16 tend to dry faster than the stems. In view of this, a different solution may be applied to the leaves than to the stems. This may be obtained by providing a pair of storage containers 60 and 62 and a pair of spray bars 64 and 66. The spray bars 64 and 66 are respectively coupled to the storage containers 60 and 62. The container 60 may hold a solution primarily formed from the drying agent, the water-proofing agent and the surface active agent and the spray bar 64 may direct this solution primarily to the stems. The container 62 may hold a solution primarily formed from the mold inhibiting agent, the waterproofing agent and the surface active agent and the spray bar 66 may direct this solution primarily to the leaves.

The materials of this invention are intended to be used primarily in drying various types of plants after the plants have been cut. These plants include alfalfa, grass and plants of the peanut family. However, the materials of this invention can be applied to grains such as wheat and corn, after the wheat and corn have been removed from the plants, to dry such grains. The materials of this invention can also be applied to other plant components to dry such plant components. In this way, the grains can be sorted in bins and other storage areas without molding.

In one application of the materials of this invention, the following materials were applied in a spray to the plants in an alfalfa field in Gainesville, Florida, during a rainy, foggy climate on August 13, 1981:

    (1) Five pounds (5 lbs) of potassium carbonate per ton of dried cut hay;

    (2) One pound (1 lb) of sodium metasilicate per ton of dried cut hay;

    (3) Five pounds (5 lbs) of sodium propionate per ton of dried cut hay;

    (4) Two percent (2%) of sodium methyl siliconate per weight of the solution; and

    (5) Five hundreths of one percent (0.05%) of alkyl glucoside per weight of the solution.

    (6) Thirty (30) gallons of water.

The above ratio between the carbonate and the metasilicate provides in the solution a pH approaching 12.5. The material was applied to the plants, before cutting, by the apparatus of this invention. The plants were baled after approximately twenty-four (24) hours. At that time, the percentage of water in the bale was less than twenty percent (20%). The bales were tested periodically thereafter. Such tests showed that the percentage of water in the bales decreased progressively, with time, below twenty percent (20%).

In contrast, other tests were conducted simultaneously with the tests described in the previous paragraph. In these other tests, some of the plants were sprayed only with water at the same rate as the application of water in the previous paragraph. In other simultaneous tests, only potassium carbonate was mixed with water in the same concentration as in the previous paragraph and this mixture was applied to plants. The plants receiving only a water spray, the plants receiving a spray of potassium carbonate and water and the plants receiving a spray of the sodium metasilicate, the potassium carbonate and the sodium propionate and water were cut and baled at the same times as the plants described in the previous paragraph. The plants receiving only water spray required a period in excess of twenty (20) days to dry sufficiently so that the moisture content was less than twenty percent (20%). The plants receiving a spray of potassium carbonate and water did not have a moisture of less than twenty percent (20%) for a period of at least twelve (12) days.

The plants receiving a spray of sodium metasilicate, potassium carbonate and sodium propionate and water were dried to a moisture content of approximately twenty percent (20%) in less than five (5) days.

Although this application has been disclosed and illustrated with reference to particular applications, the principles involved are susceptible of numerous other applications which will be apparent to persons skilled in the art. The invention is, therefore, to be limited only as indicated by the scope of the appended claims.

CLAIMS

1. A composition for use in a solution for drying cut plants and plant components, comprising at least one drying agent providing a basic pH in the solution of at least 11 and having properties of becoming at least partially insoluble at a pH no greater than approximately 13.4 in the solution; at least one mold-inhibiting agent mixed with the drying agent and having properties of remaining inactive until the occurrence of acidic conditions inducing molding of the plant and having properties of reacting with moisture under such acidic conditons inducing molding to inhibit such molding; and at least one of the ingredients selected from the group consisting of a waterproofing agent and a surface active agent, the waterproofing agent being mixed with the drying agent and the mold-inhibiting agent and having properties, at the pH of the drying agent and the mold-inhibiting agent in the solution, for providing for a passage of moisture from the plants while preventing water drops and droplets from being reabsorbed on the plants and the surface active agent being mixed with the drying agent and the mold-inhibiting agent, at the pH of the drying agent and the mold-inhibiting agent in the solution, for acting on the surface of the plants to provide for the penetration of the drying agent and the mold-inhibiting agent into at least selective portions of plants.

2. The composition set forth in Claim 1 wherein the drying agent is selected from a group consisting of the carbonates, phosphates and silicates of at least one of sodium and potassium and a combination of the hydroxides and carbonates or bicarbonates of at least one of sodium and potassium.

3. The composition set forth in Claims 1 or 2 wherein the drying agent is included in the solution in a weight of approximately 3 to 6 pounds per ton of dried cut plants or plant components.

4. The composition set forth in Claim 1, 2 or 3 wherein the mold-inhibiting agent is selected from a group consisting of acid salts of acids including propionic, sorbic, acetic and carboxylic acids.

5. The composition set forth in Claims 1, 2, 3 or 4 wherein the mold-inhibiting agent is included in the solution of a weight of approximately 2 to 6 pounds per ton of dried cut plants or plant components.

6. The composition set forth in any of Claims 1 through 5 wherein the waterproofing agent constitutes sodium methyl siliconate.

7. The composition set forth in Claim 6 wherein the sodium methyl siliconate is dissolved in a hydroxide base.

8. The composition set forth in Claim 6 or 8 wherein the sodium methyl siliconate has a percentage by weight of approximately thirty percent (30%) in the hydroxide base and the sodium methyl siliconate has a percentage by weight in the solution in the range of approximately 0.1% to 3% by weight.

9. The composition set forth in any of Claims 1 through 8 wherein the waterproofing agent is included in the solution in a weight of approximately 0.1% to 3% by weight of dried cut plants or plant components.

10. The composition set forth in any one of the preceding claims wherein the surface active agent constitutes alkyl glucoside.

11. The composition set forth in any of the preceding claims wherein the surface active agent is included in the solution in a range of approximately 0.01% to 0.02%.

12. A method of drying cut plants and plant components, including the following steps: providing a basic solution containing a drying agent, a mold-inhibiting agent and at least one of a waterproofing

-34-

agent or a surface active agent, the waterproofing agent being mixed with the drying agent and the mold-inhibiting agent and having properties, at the pH of the drying agent and the mold-inhibiting agent in the solution, for providing for a passage of moisture from the plants while preventing water drops and droplets from being reabsorbed on the plants and the surface active agent being mixed with the drying agent and the mold-inhibiting agent, at the pH of the drying agent and the mold-inhibiting agent in the solution, for acting on the surface of the plants to provide for the penetration of the drying agent and the mold-inhibiting agent into at least selective portions of plants, applying the solution to bent plants, cutting the plants after the application of the solution to the plants, and maintaining the cut plants on the ground for a particular period of time to provide for a withdrawal of moisture from the cut plants while inhibiting the reabsorption of drops and droplets of water into the plants.

13. A method as set forth in Claim 12, including regulating the concentration of the surface active agent in the solution in accordance with the characteristics of the cut plants and the penetration desired of the leaves of the plants to provide a controlled reduction of the surface-tension on such leaves and a controlled penetration of the solution into the leaves.

14. A method as set forth in Claim 12 or 13 wherein the drying agent is selected from a group consisting of the carbonates, phosphates and silicates of at least one of sodium and potassium and a combination of the hydroxides and carbonates or bicarbonates of at least one of sodium and potassium.

15. A method as set forth in Claims 11, 12 or 13 wherein the drying agent is included in the solution in a weight of approximately 3 to 6 pounds per ton of dried cut plants or plant components.

16. A method as set forth in any of Claims 12 through 15 wherein the mold-inhibiting agent is selected from a group consisting of acid salts or acids including propionic, sorbic, acetic and carboxylic acids.

17. A method as set forth in any of Claims 12 through 16 wherein the mold-inhibiting agent is included in the solution in a weight of approximately 2 to 6 pounds per ton of dried cut plants or plant components.

18. A method as set forth in any of Claims 12 through 17 wherein the surface active agent is alkyl glucoside.

19. A method as set forth in any of Claims 12 through 18 wherein the surface active agent is included in the solution in a range of approximately 0.0% to 0.02%.

20. A method as set forth in any of Claims 12 through 19 wherein the waterproofing agent is sodium methyl siliconate.

21. A method as set forth in any of Claims 12 through 20 wherein the waterproofing agent is included in the solution in a weight of approximately 0.1% to 3% by weight of dried cut plants or plant components.

22. A composition for use in a solution for drying cut plants and plant components, comprising a first drying agent providing a colloidal suspension in an aqueous solution having basic properties, and a second drying agent providing a buffering action with the first drying agent in the solution to limit the pH of the solution to a particular value and cooperating with the first drying agent to provide a protective coating on the plants when applied to the plants.

23. The composition set forth in Claim 22, the first drying agent providing a pH of at least 12.4 and the second drying agent limiting the pH to a maximum value of approximately 13.2.

24. The composition set forth in Claim 22 wherein the first and second drying agents provide a pH in the solution of approximately 10 to 11 and wherein a mold-inhibiting agent is included in the solution and is provided with characteristics of becoming active when the plants ferment to produce an acidic pH.

25. The composition set forth in Claim 22, 23 or 24 wherein the first and second drying agents react to form a complex which provide a protective coating on particular portions of the plant.

26. The composition set forth in Claim 25 wherein the protective complex produced on the cut plants is in the form of a gel and wherein the first and second drying agents are applied primarily to the stems of the plants to produce the protective complex primarily on the stems of the cut plants.

27. The composition set forth in any of Claims 22 through 26 wherein the first drying agent is a silicate and the second drying agent is a carbonate.

28. The composition set forth in any of Claims 22 through 27 wherein the first drying agent is sodium metasilicate and the second drying agent is a carbonate of a positive ion selected from a group consisting of sodium and potassium.

29. The composition set forth in any one of Claims 22 to 28 including a mold-inhibiting agent having properties of becoming active at an acidic pH to inhibit the formation of molds in the dried cut plants.

30.  The composition set forth in any one of Claims 22 to 29 including at least one of a surface agent for facilitating the penetration of the solution to the leaves.

31.  The composition set forth in any one of Claims 22 to 30 wherein a waterproofing agent is included in the solution for providing for a passage of moisture from the plants while preventing water drops and droplets from being reabsorbed on the plants.

32.  A method of drying cut plants having stems and leaves and of drying plant components, including the following steps:  bending the cut plants, applying primarily to the stems of the cut plants a solution having a pH between approximately 12.4 and 13.2 and including a first drying agent providing a pH of at least 12.4 and a second drying agent providing a buffer with the first drying agent to limit the pH of the first drying agent in the solution to a maxiumum value of approximately 13.2, and cutting the cut plants at the stems after the application of the solution primarily to the stems.

33.  A method of drying cut plants and plant components as specified in Claim 32, including the steps of:  including in the solution a mold-inhibiting agent having properties of becoming activated, upon the fermentation of the cut plants to reduce the pH of the solution on the plants to an acidic value, to inhibit the production of mold on the plants, and baling the cut plants when the moisture content in the cut plants has been reduced to a particular level.

34.  A method as set forth in Claims 32 or 33, including the steps of:  windrowing the plants

-38-

after they have been cut and before they have been baled, and raking the plants after windrowing but before baling.

35. A method as set forth in Claims 32, 33 or 34 including the steps of: including in the solution a surface active agent for facilitating the action of the drying agents and the mold-inhibiting agents on the leaves.

36. A method as set forth in any of Claims 32 to 35 including in the solution a waterproofing agent for providing for the passage of water vapor between the leaves and the atmosphere while inhibiting the passage of water drops onto the leaves.

37. A composition for use in a solution for drying cut plants and plant components, comprising a first mold-inhibiting agent for providing an immediate action in inhibiting the forming of fungi in the dried cut plants, and a second mold-inhibiting agent having properties of inhibiting the formation of fungi in the dried cut plants when the pH becomes acidic.

38. The composition set forth in Claim 37 wherein the first mold-inhibiting agent is an isothiazolin and the second mold-inhibiting agent is propionate.

39. The composition set forth in Claim 37 or 38 wherein the isothiazolin is 2N-octyl-4-isothiazolin-3-1 and the propionate is selected from a group consisting of acid salts of propionic, sorbic, acetic and carboxylic acids.

40. The composition of Claim 37, 38 or 39, including at least one drying agent providing a pH of at least 10 in the solution for drying the water in and on the cut plants.

41. The composition of Claim 40, including drying agents for providing a pH between approximately 12.4 and 13.2 to obtain a rapid drying of the water in the cut plants.

42. A composition for use in a solution for drying cut plants and plant components, comprising a first drying agent providing a pH of at least a first particular value and having properties of rapidly drying the water in the cut plants, a second drying agent having properties of limiting the pH of the first drying agent to a second particular value greater than the first particular value and having properties of forming a complex with the first drying agent to produce a protective coating on the surface of the dried cut plants, a first mold-inhibiting agent having properties of instantaneously inhibiting the combustion of carbohydrates in the dried cut plants and the resultant production of water and having properties of instantaneously inhibiting the formation of fungi in the dried plants, and a second mold-inhibiting agent having properties of inhibiting the formation of fungi in the dried cut plants for acidic values of pH.

43. The composition set forth in Claim 42 wherein the first mold-inhibiting agent is an isothiazolin and the second mold-inhibiting agent is propionate.

44. The composition set forth in Claim 42 or 43 wherein the first drying agent is a metasilicate and the second drying agent is a carbonate.

45. The composition set forth in Claim 42, 43 or 44 wherein the pH of the drying agents in the solution is between approximately 12.4 and 13.2.

46. A method of drying cut plants having stems and leaves and for drying plant components, including the following steps: providing a solution containing drying agents for quickly drying the plants and forming a protective coating at least on the stems of the plants, a first mold-inhibiting agent for instantaneously inhibiting the production of fungi and the combustion of sugar in the plants

**Fig.1**

10
25
14
16
30
28
32
20
22
18
12

**Fig.2**

25

STORAGE
CONTAINER

20
18
16
22
28
AUGER
14
24
30
26
12

0091092

Fig. 3

48 F/F
50 F/F

25 STORAGE CONTAINER

44 46 20 18 16
22
40 28 AUGER 14 42 12
26

Fig. 4

60 STORAGE CONTAINER

25 64 22 16
62 20 18
22
28 AUGER 14 12 24
26

Fig. 5

STORAGE CONTAINER

25 22 SENSOR
20 16
20 22
24
28 AUGER 12
26

## European Patent Office

## EUROPEAN SEARCH REPORT

### DOCUMENTS CONSIDERED TO BE RELEVANT

| Category | Citation of document with indication. where appropriate, of relevant passages | Relevant to claim | CLASSIFICATION OF THE APPLICATION (Int Cl. ³) |
|---|---|---|---|
| P,X<br>Y | EP-A-0 063 920 (FENN & COMPANY)<br><br>* Whole document * | 1-5,12<br>-17,37<br>-41 | A 23 B 7/02<br>A 23 P 1/00<br>A 23 K 3/00<br>A 23 K 3/02 |
| X,Y | CHEMICAL ABSTRACTS, vol. 93, no. 11, 15th September 1980, page 578, no. 112551g, Columbus, Ohio, USA<br>M. WIEGHART et al.: "Hastening drying rate of cut alfalfa with chemical treatment" & J. ANIM. SCI. 1980, 51(1), 1-9 * Abstract * | 1-3,12<br>-15 | |
| Y | CHEMICAL ABSTRACTS, vol. 90, no. 9, 26th February 1979, page 128, no. 67609g, Columbus, Ohio, USA<br>J.N. TULLBERG et al.: "The effect of potassium carbonate solution on the drying of lucerne. 2. Field studies" & J. AGRIC. SCI. 1978, 91(3), 557-561 * Abstract * | 1-3,12<br>-15 | |
| Y | DE-A-2 147 243 (F. WIENEKE)<br><br>* Claims *<br><br>--- -/- | 1,4,5<br>12,16<br>17 | TECHNICAL FIELDS SEARCHED (Int. Cl ³)<br><br>A 23 K<br>A 23 B<br>A 23 P<br>A 01 D |

The present search report has been drawn up for all claims

| Place of search<br>THE HAGUE | Date of completion of the search<br>13-07-1983 | Examiner<br>GALLIGANI L. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

| DOCUMENTS CONSIDERED TO BE RELEVANT | | | Page 2 |

| Category | Citation of document with indication, where appropriate, of relevant passages | Relevant to claim | CLASSIFICATION OF THE APPLICATION (Int. Cl. ³) |
|---|---|---|---|
| A | US-A-3 218 172  (E.H. HESS)<br><br>* Column 1, line 50 - column 2, line 30; column 10, line 33 - column 11, line 18 * | 1,12, 13 | |
| A | GB-A-1 072 655  (ROHM & HAAS CO.) | | |

TECHNICAL FIELDS
SEARCHED (Int. Cl. ³)

The present search report has been drawn up for all claims

| Place of search<br>THE HAGUE | Date of completion of the search<br>13-07-1983 | Examiner<br>GALLIGANI L. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82